# EUROPEAN PATENT APPLICATION

(11) **EP 4 832 181 A1**
(43) Date of publication of application: **28.10.2026**
(21) Application number: 26171680.7
(22) Date of filing: 10.04.2026
(51) Int. Cl.: H01M 50/15, H01M 50/342

(54) **ELECTRICAL ENERGY STORAGE DEVICE**

(30) Priority: 21.04.2025 JP 2025069492
(71) Applicant: Prime Planet Energy & Solutions, Inc., Chuo-ku, Tokyo 103-0022 (JP)
(72) Inventor: UCHIDA, Yozo, Tokyo,, 103-0022 (JP); FUJIMURA, Satoshi, Tokyo,, 103-0022 (JP)
(74) Representative: Kuhnen & Wacker Patent- und Rechtsanwaltsbüro PartG mbB

(57) **Abstract**

The gas discharging valve provided in a case according to the electrical energy storage device disclosed herein comprises In this embodiment a region 1 to a region 8 in the groove portion having a planar shape of an ellipse. The thicknesses of the residual wall portion in the region 1 to the region 8 are designated as Tᵣ₁ to Tᵣ₈, respectively. At this time, the thickness Tᵣ₃ of the residual wall portion in the third region is smaller than the thicknesses of the residual wall portion in the other regions except for the thickness Tᵣ₇ of the residual wall portion in the seventh region, and the thickness Tᵣ₇ of the residual wall portion in the seventh region is smaller than the thicknesses of the residual wall portion in the other regions except for the thickness Tᵣ₃ of the residual wall portion in the third region.

## Description

### BACKGROUND OF THE DISCLOSURE

### 1. Field

The present disclosure relates to an electrical energy storage device.

### 2. Background

An electrical energy storage device such as a lithium-ion secondary battery comprises, for example, an electrode body and a case for housing the electrode body. A case used for this type of electrical energy storage device may be provided with a gas discharging valve to improve safety. Such a gas discharging valve is designed to be activated (e.g., to allow a residual wall portion to break) at a predetermined pressure when a large amount of gas is generated in the inside of the case. This causes the gas discharging valve to open and discharge the gas present in the inside of the case to the outside. With regard to such a technology, Japanese Patent Publication No. 2014-192104 discloses a battery (an electrical energy storage device) comprising a sensor for detecting the deformation of a thin wall portion (a residual wall portion), for purpose of improving detection accuracy.

### SUMMARY

Meanwhile, in order to rapidly discharge the gas present in the inside of the case to the outside, a sufficient opening is required to be formed in the gas discharging valve after the gas discharging valve is activated. However, according to the research of the present inventors, a sufficient opening may not be formed in a conventional gas discharging valve, depending on a breakage initiation position of the residual wall portion, potentially resulting in delayed gas discharge.

The present disclosure is made in light of the above circumstances. A main object of the present disclosure is to provide an electrical energy storage device capable of forming a sufficiently large opening in a gas discharging valve.

The technology disclosed herein relates to an electrical energy storage device comprising an electrode body and a case for housing the electrode body. The case comprises a gas discharging valve. The gas discharging valve comprises a groove portion having a planar shape of an ellipse defined by a major axis A and a minor axis B, and a residual wall portion adjacent to the groove portion in a thickness direction of the gas discharging valve. Here, the gas discharging valve comprises a first region from 11 o'clock to 1 o'clock, a second region from 1 o'clock to 2 o'clock, a third region from 2 o'clock to 4 o'clock, a fourth region from 4 o'clock to 5 o'clock, a fifth region from 5 o'clock to 7 o'clock, a sixth region from 7 o'clock to 8 o'clock, a seventh region from 8 o'clock to 10 o'clock, and an eighth region from 10 o'clock to 11 o'clock in the groove portion having a planar shape of an ellipse when one end of the minor axis B corresponds to 0 o'clock, and the other end of the minor axis B corresponds to 6 o'clock, and one end of the major axis A corresponds to 3 o'clock, and the other end of the major axis A corresponds to 9 o'clock. Then, when the thicknesses of the residual wall portion in the first region to the eighth region are denoted as Tᵣ₁ to Tᵣ₈, respectively, the thickness Tᵣ₃ of the residual wall portion in the third region is smaller than the thicknesses of the residual wall portion in the other regions except for the thickness Tᵣ₇ of the residual wall portion in the seventh region, and the thickness Tᵣ₇ of the residual wall portion in the seventh region is smaller than the thicknesses of the residual wall portion in the other regions except for the thickness Tᵣ₃ of the residual wall portion in the third region.

As described above, the gas discharging valve provided in the electrical energy storage device disclosed herein has the thickness Tᵣ₃ of the residual wall portion in the third region and the thickness Tᵣ₇ of the residual wall portion in the seventh region, which are smaller than the thicknesses of the residual wall portion in the other regions. According to this configuration, when the internal pressure in the case reaches an activation pressure of the gas discharging valve, the residual wall portion first breaks in the third region and the seventh region. In other words, the both ends along the major axis A of the ellipse will preferentially break in the gas discharging valve. Subsequently, as the residual wall portion continues to experience the internal pressure, the breakage of the residual wall portion occurs sequentially starting at these breakage initiation points. In this manner, a sufficient opening is formed along the groove portion in the gas discharging valve.

### BRIEF DESCRIPTION OF THE DRAWINGS

FIG. 1 shows a perspective view of an electrical energy storage device according to one embodiment.
FIG. 2 shows a schematic view of the internal structure of the electrical energy storage device shown in FIG. 1.
FIG. 3 shows a perspective view of the electrical energy storage device shown in FIG. 1 inverted upside down.
FIG. 4 shows a schematic plan view of the vicinity of a gas discharging valve according to one embodiment.
FIG. 5 shows a schematic cross-sectional view along the line V-V in FIG. 4.
FIG. 6 shows a schematic cross-sectional view along the line VI-VI in FIG. 4.
FIG. 7A shows a CAE analysis diagram for the stress distribution of the gas discharging valve at the outer surface side of the case when the internal pressure (0.15 MPa) is applied to the case according to this embodiment.
FIG. 7B shows a CAE analysis diagram for the stress distribution of the gas discharging valve at the outer surface side of the case when the internal pressure (0.2 MPa) is applied to the case according to this embodiment.
FIG. 7C shows a CAE analysis diagram for the stress distribution of the gas discharging valve at the outer surface side of the case when the internal pressure (0.25 MPa) is applied to the case according to this embodiment.
FIG. 7D shows a CAE analysis diagram for the stress distribution of the gas discharging valve at the outer surface side of the case when the internal pressure (0.35 MPa) is applied to the case according to this embodiment.
FIG. 8A shows a CAE analysis diagram for the stress distribution of the gas discharging valve at the inner surface side of the case when the internal pressure (0.25 MPa) is applied to the case according to this embodiment.
FIG. 8B shows a CAE analysis diagram for the stress distribution of the gas discharging valve at the inner surface side of the case when the internal pressure (0.35 MPa) is applied to the case according to this embodiment.
FIG. 9 shows a schematic plan view of the vicinity of a gas discharging valve according to a first modified example.
FIG. 10 shows a schematic longitudinal sectional view along the line X-X in FIG. 9.

### DETAILED DESCRIPTION OF THE PREFERRED EMBODIMENTS

Below, several preferred embodiments of the present disclosure will be described with reference to the accompanying drawings as appropriate. Those matters which are not specifically mentioned in the present specification, but are necessary for implementing the present disclosure (for example, a general configuration and manufacturing process of an electrical energy storage device not characterized by the present disclosure) may be considered as design matters within the level of those skilled in the art based on conventional technologies. The present disclosure can be implemented based on the contents disclosed in the present specification and the common technical knowledge in the art.

It is noted that in the following drawings, the same symbols are assigned to those components and regions performing the same functions, and redundant explanations may be omitted or simplified. The expression "A to B" as used for indicating a range in the present specification shall encompass both the meaning of "A or more and B or less" and the meaning of "above A and below B."

It is noted that in the following description, the symbols L, R, F, Rr, U, and D in the drawings represent left, right, front, rear, upper, and down, respectively. The symbols X, Y, and Z in the drawings represent the short side direction, the long side direction perpendicular to the short side direction, and the vertical direction perpendicular to both the short side direction and the long side direction of an electrical energy storage device 100, respectively. However, these directions are defined for the sake of explanation and shall not in any way limit the installation modes of the electrical energy storage device 100.

The term "electrical energy storage device" as used in the present specification refers to a device in which charging and discharging occur due to the movement of charge carriers between a pair of electrodes (a positive electrode and a negative electrode) through an electrolyte. Examples of the electrical energy storage device include secondary batteries such as lithium-ion secondary batteries, nickel-metal hydride batteries, and nickel-cadmium batteries; capacitors such as lithium-ion capacitors and electric double-layer capacitors. The electrical energy storage device may be, for example, a lithium-ion secondary battery.

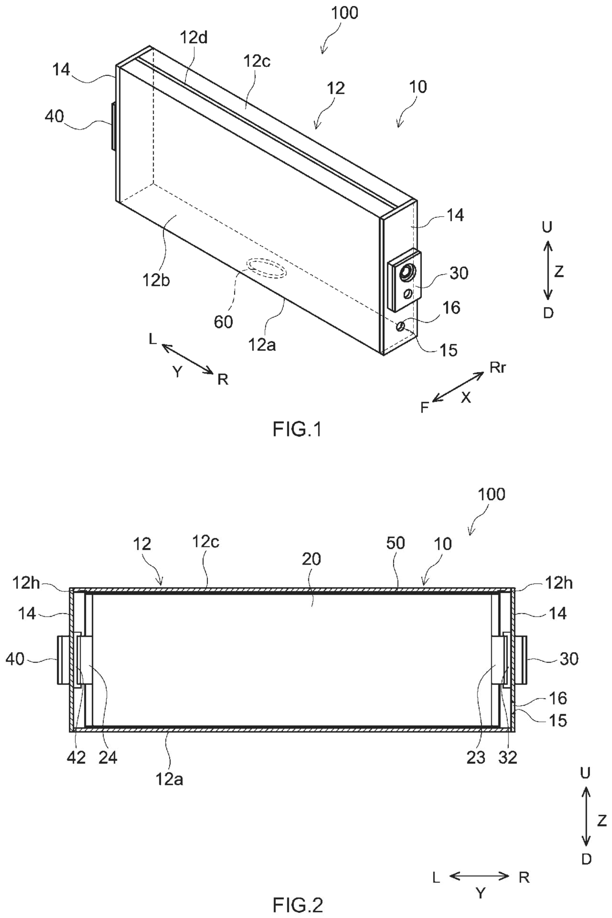

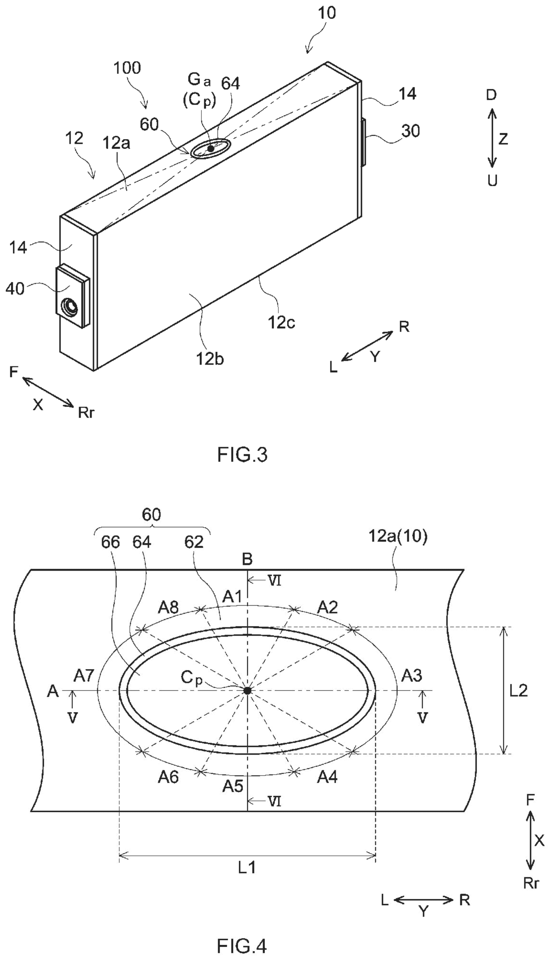

FIG. 1 shows a perspective view of an electrical energy storage device 100 according to one embodiment. FIG. 2 shows a schematic view of the internal structure of the electrical energy storage device 100 shown in FIG. 1. FIG. 3 shows a perspective view of the electrical energy storage device 100 shown in FIG. 1 inverted upside down.

As shown in FIGs. 1 and 2, the electrical energy storage device 100 according to this embodiment comprises a case 10, an electrode body 20, a positive electrode terminal 30, a negative electrode terminal 40, and an insulating film 50. Although not shown in the figures, the electrical energy storage device 100 further comprises a non-aqueous electrolyte solution in this embodiment. The electrical energy storage device 100 in this embodiment is a lithium-ion secondary battery.

As shown in FIG. 1, the case 10 in this embodiment has a flattened and parallelepiped (rectangular) outer shape with a bottom. As shown in FIG. 2, the case 10 comprises a case body 12 having openings 12h, which is configured to house an electrode body 20 and a non-aqueous electrolyte solution, and sealing plates 14 for sealing the openings 12h. More specifically, the case 10 comprises a case body 12 having a pair of openings 12h at each end along the long side direction Y, and two sealing plates 14 each for closing the corresponding opening of the pair of openings 12h of the case body 12.

There is no particular limitation for the material of the case 10 as long as it has a specified strength. Examples of such a material include metal materials primarily composed of aluminum, metal materials primarily composed of iron (such as SUS), and other materials. For example, in view of easy designability and formability for a given activation pressure of the gas discharging valve 60, the case 10 is preferably composed of a metal material primarily composed of aluminum. It is noted that the term "metal material composed primarily of aluminum" as used in the present specification refers to a metal material containing 90 mass% or more of aluminum relative to the total weight. The term encompasses, for example, aluminum, aluminum alloys, and the like.

The case body 12 in this embodiment is a hollow and rectangular tube. As shown in FIG. 1, the case body 12 comprises a lower surface 12a, a pair of long side surfaces 12b, and an upper surface 12c. The lower surface 12a is of a substantially rectangular shape having a pair of long sides and a pair of short sides. The pair of long side surfaces 12b each extend upward (in the direction U) from the corresponding side of the pair of long sides (edges) of the lower surface 12a, and face each other. The upper surface 12c has a substantially rectangular shape and is located opposite to the lower surface 12a. The long side surfaces 12b each have a larger area than the lower surface 12a and the upper surface 12c. The upper surface 12c connects the upper ends of the pair of long side surfaces 12b together.

It is noted that the term "substantially rectangular shape" as used in the present specification encompasses not only a perfect rectangular shape (rectangular form) but also those shapes having rounded i.e., R-shaped, corners connecting the long and short sides of a rectangle, those shapes having notches at the corners, and the like.

The case body 12 can be formed, for example, by bending a single metal plate into a hollow tube structure and joining (e.g., welding) the joints. Therefore, in this embodiment, the lower surface 12a, the pair of long side surfaces 12b, and the upper surface 12c are each flat plate-shaped and have a substantially uniform plate thickness. A welded joint 12d is provided on the upper surface 12c of the case body 12. In the case body 12, the boundary portions (edges) between the long side surfaces 12b and the lower surface 12a, and the boundary portions (edges) between the long side surfaces 12b and the upper surface 12c correspond to bending portions.

The sealing plates 14 are plate-shaped members having substantially rectangular shapes. In this embodiment, the areas of the sealing plates 14 are smaller than that of the long side surfaces 12b. The sealing plates 14 are flat plate-shaped, and have a substantially uniform plate thickness.

As shown in FIG. 1, one of the sealing plates 14 is provided with a liquid-filling hole 15. The liquid-filling hole 15 is provided for introducing the electrolyte solution into the case 10 after the pair of sealing plates 14 are attached to the case body 12. The liquid-filling hole 15 is sealed with a sealing member 16 after introducing the electrolyte solution. It is noted that there is no particular limitation for the sealing member 16, and any publicly known members may be used. Examples of the sealing member 16 include blind rivets. It is noted that in this embodiment, the liquid-filling hole 15 is provided at the sealing plate(s) 14, but in other embodiments, the liquid-filling hole 15 may be provided in the case body 12.

The case 10 according to this embodiment comprises a gas discharging valve 60. The gas discharging valve 60 is configured to break to discharge the gas present in the inside of the case 10 to the outside when the pressure inside the case 10 exceeds a predetermined value. As shown in FIG. 3, in this embodiment, the gas discharging valve 60 is provided at the lower surface 12a of the case body 12. However, the location where the gas discharging valve 60 is provided may be at a surface other than the lower surface 12a of the case body 12 (the long side surface(s) 12b, the upper surface 12c), or the gas discharging valve 60 may also be provided at the sealing plate(s) 14. Further, in this embodiment, the number of the gas discharging valve 60 is one, but in other embodiments, there may be two or more. The material of the gas discharging valve 60 may be the same as that of the case 10. Therefore, redundant descriptions are omitted here.

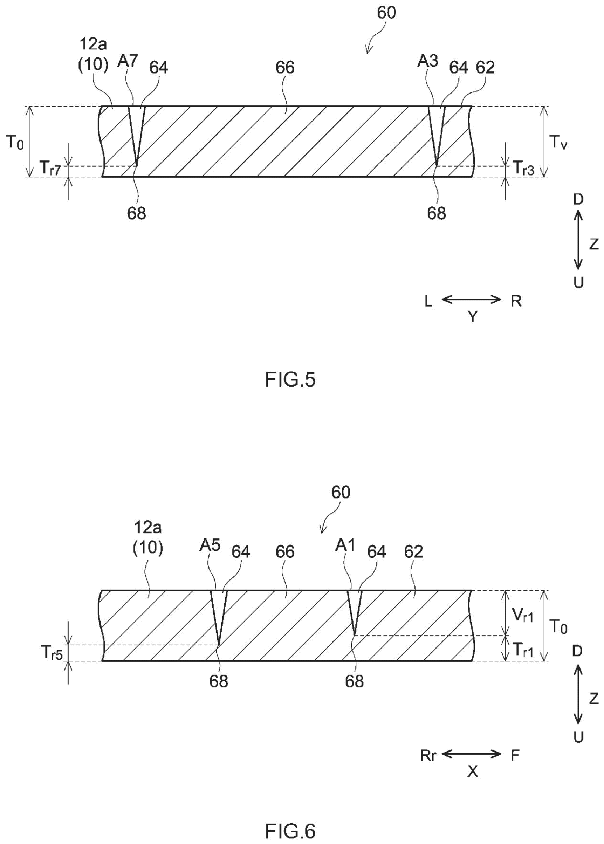

FIG. 4 shows a schematic plan view of the vicinity of a gas discharging valve 60 according to one embodiment. FIG. 5 shows a schematic cross-sectional view along the line V-V in FIG. 4. FIG. 6 shows a schematic cross-sectional view along the line VI-VI in FIG. 4. FIG. 4 shows the extents of the major axis A, the minor axis B, and the first region A1 to the eighth region A8 of the ellipse of the groove portion 64 are represented by dashed lines. The gas discharging valve 60 according to this embodiment comprises a base portion 62, the groove portion 64, a valve portion 66, and a residual wall portion 68. Below, the specific configuration of the gas discharging valve 60 of the case 10 according to this embodiment will be described.

### (1) Base portion

The base portion 62 is a region which is formed into a flat plate shape. There is no particular limitation for the thickness T₀ of the base portion 62 (see FIG. 5), but it is preferably 0.1 mm to 1.0 mm, and more preferably 0.3 mm to 0.7 mm. According to this configuration, the deformation or damage to the base portion 62 can be prevented when the internal pressure of the case reaches a predetermined pressure. This enables reliable breakage of the groove portion 64.

In this embodiment, the base portion 62 is continuously formed from the lower surface 12a of the case body 12. In other words, the thickness of the case body 12 and the thickness T₀ of the base portion 62 are substantially the same in this embodiment. However, the thickness of the case 10 (the case body 12 and/or the sealing plates 14) may differ from that of the base portion 62. Such a configuration can be formed, for example, by performing press forming on a flat plate-shaped metal member. At this time, a process of direct pressing is performed on the case 10 (the case body 12 and/or the sealing plates 14). This enables the formation of the case 10 (the case body 12 and/or the sealing plates 14) in which the base portion 62 of the gas discharging valve 60 and the other regions of the case 10 (the case body 12 and/or the sealing plates 14) are seamlessly integrated together. This, in turn, can reliably prevent leakage of the electrolyte solution from a joint portion of the gas discharging valve 60. Further, a step of joining the gas discharging valve 60 to the case 10 can be omitted. This can contribute to improved work efficiency. However, the technology disclosed herein is not limited to the configuration where the base portion 62 of the gas discharging valve 60 and the case 10 (the case body 12 and/or the sealing plates 14) are integrated together. That is, the base portion of the gas discharging valve which is separately formed may be joined to the other regions of the sealing plates. In this embodiment, a method may be used in which an opening is pre-formed in the case 10 at a location where the gas discharging valve is to be provided, and the gas discharging valve is fit into this opening, and then the base portion of the gas discharging valve is welded to the periphery of the opening. Advantageously, in an aspect where the gas discharging valve is formed separately as described above, the gas discharging valve can be formed relatively easier. Advantageously, this also enables easier sales and distributions of the pre-formed gas discharging valve.

### (2) Valve portion

The valve portion 66 is a region enclosed by the groove portion 64 described below. As shown in FIG. 4, the shape of the valve portion 66 is elliptical in plan view. That is, the valve portion 66 having an elliptical shape is formed radially inward of the groove portion 64 having a planar shape of an ellipse. A surface of the valve portion 66 in the inner surface side of the case 10 serves as a gas receiving surface.

There is no particular limitation for the thickness Tᵥ of the valve portion 66, and it may be adjusted as appropriate. To ensure more reliable activation of the gas discharging valve 60, the thickness Tᵥ of the valve portion 66 is preferably larger than or equal to the thickness T₀ of the base portion 62. As shown in FIGs. 5 and 6, the thickness Tᵥ of the valve portion 66 is substantially the same as the thickness T₀ of the base portion 62. When the thickness Tᵥ of the valve portion 66 is substantially the same as the thickness T₀ of the base portion 62, the gas discharging valve 60 can be formed relatively easily. This can contribute to improved manufacturing efficiency.

### (3) Groove portion

As shown in FIG. 4, in a case of the gas discharging valve 60 according to this embodiment, the groove portion 64 is formed on a surface of the case 10 (in this embodiment, a surface in the outer surface side of the case 10). Further, in a case of the gas discharging valve 60 according to this embodiment, the residual wall portion 68 adjacent to the groove portion 64 is provided in the thickness direction (the Z-axis direction) of the gas discharging valve 60. In other words, the residual wall portion 68 is a region where the groove portion 64 is not formed in a cross-sectional view of the gas discharging valve 60. A portion where the groove portion 64 as described above is formed represents a vulnerable region having particularly weak strength. Therefore, in this embodiment, when the internal pressure of the case reaches a predetermined pressure, the residual wall portion 68 breaks along the groove portion 64. This causes the base portion 62 and the valve portion 66 to be separated, opening the gas discharging valve 60. This allows the gas present in the inside of the case 10 to be discharged to the outside.

As shown in FIGs. 3 and 4, the shape of the groove portion 64 in this embodiment has a planar shape of an ellipse. Such an elliptical shape can be defined by the major axis A and the minor axis B. There is no particular limitation for the aspect ratio (the longest diameter L1/the shortest diameter L2) of this elliptical groove portion 64, but it is preferably 2 or more, and more preferably 3 or more. There is also no particular limitation for the upper limit of the aspect ratio of this elliptical groove portion 64, but it is preferably 5 or less, and more preferably 4 or less. This enables the gas discharging valve 60 to be opened more reliably.

Meanwhile, in a case of a conventional gas discharging valve, a base portion and a valve portion may not sufficiently be separated, potentially resulting in insufficient opening of the gas discharging valve, depending on a breakage initiation position of a groove portion. In contrast, the gas discharging valve 60 according to this embodiment uses the groove portion 64 having the following configuration.

As shown in FIG. 4, the gas discharging valve 60 comprises a first region A1, a second region A2, a third region A3, a fourth region A4, a fifth region A5, a sixth region A6, a seventh region A7, and an eighth region A8. As used in the present specification, in the groove portion 64 having an planar shape of an ellipse, one end (in this embodiment, the F side) of the minor axis B (in the short side direction X) is designated as 0 o'clock, the other end (in this embodiment, the Rr side) of the minor axis B is designated as 6 o'clock, one end (in this embodiment, the R side) of the major axis A (in the long side direction Y) is designated as 3 o'clock, and the other end (in this embodiment, the L side) of the major axis A is designated as 9 o'clock. At this time, the gas discharging valve 60 is divided into eight regions: the first region A1 to the eighth region A8. The first region A1 is a region from 11 o'clock to 1 o'clock. The second region A2 is a region from 1 o'clock to 2 o'clock. The third region A3 is a region from 2 o'clock to 4 o'clock. The fourth region A4 is a region from 4 o'clock to 5 o'clock. The fifth region A5 is a region from 5 o'clock to 7 o'clock. The sixth region A6 is a region from 7 o'clock to 8 o'clock. The seventh region A7 is a region from 8 o'clock to 10 o'clock. The eighth region is a region from 10 o'clock to 11 o'clock.

As used in the present specification, the thicknesses of the residual wall portion 68 in the first regions A1 to the eighth region A8 are designated as Tᵣ₁ to Tᵣ₈, respectively. In this embodiment, the thickness Tᵣ₃ of the residual wall portion 68 in the third region A3 is smaller than the thicknesses of the residual wall portion 68 in the other regions (the first region A1, the second region A2, the fourth region A4 to the sixth region A6, and the eighth region A8) except for the thickness Tᵣ₇ of the residual wall portion 68 in the seventh region A7. Further, the thickness Tᵣ₇ of the residual wall portion 68 in the seventh region A7 is smaller the thicknesses of the residual wall portion 68 in the other regions (the first region A1, the second region A2, the fourth region A4 to the sixth region A6, and the eighth region A8) except for the thickness Tᵣ₃ of the residual wall portion 68 in the third region. This enables the gas discharging valve 60 to be sufficiently opened.

In the gas discharging valve 60 according to this embodiment, the thickness Tᵣ₃ of the residual wall portion 68 in the third region A3 and the thickness Tᵣ₇ of the residual wall portion 68 in the seventh region A7 are smaller than the thicknesses of the residual wall portion 68 in the other regions. Therefore, when the internal pressure in the case 10 increases and reaches an activation pressure of the gas discharging valve 60, the residual wall portion 68 breaks first in the third region A3 and the seventh region A7. In other words, among the gas discharging valves 60, the both end portions (3 o'clock and 9 o'clock) in the direction of the major axis A of the ellipse break preferentially. Subsequently, as the residual wall portion 68 continues to experience the internal pressure, the breakage of the residual wall portion occurs sequentially starting at these breakage initiation points. In this manner, a sufficient opening can be formed in the gas discharging valve 60 along the groove portion 64. This allows the gas present in the inside of the case 10 to be discharged to the outside.

It is noted that the term "thickness of the residual wall portion" as used in the present specification refers to a difference between the thickness of the base portion 62 and the depth of the groove portion 64. For example, as shown in FIG. 6, the thickness Tᵣ₁ of the residual wall portion 68 in the first region A1 refers to a difference (T₀ - Vᵣ₁) between the thickness T₀ of the base portion 62 and a depth Vᵣ₁ of the groove portion 64 in the first region A1. It is noted that conditions similar to those described above shall be applied to the thicknesses Tᵣ₂ to Tᵣ₈ of the residual wall portion 68 of the second region A2 to the eighth region A8.

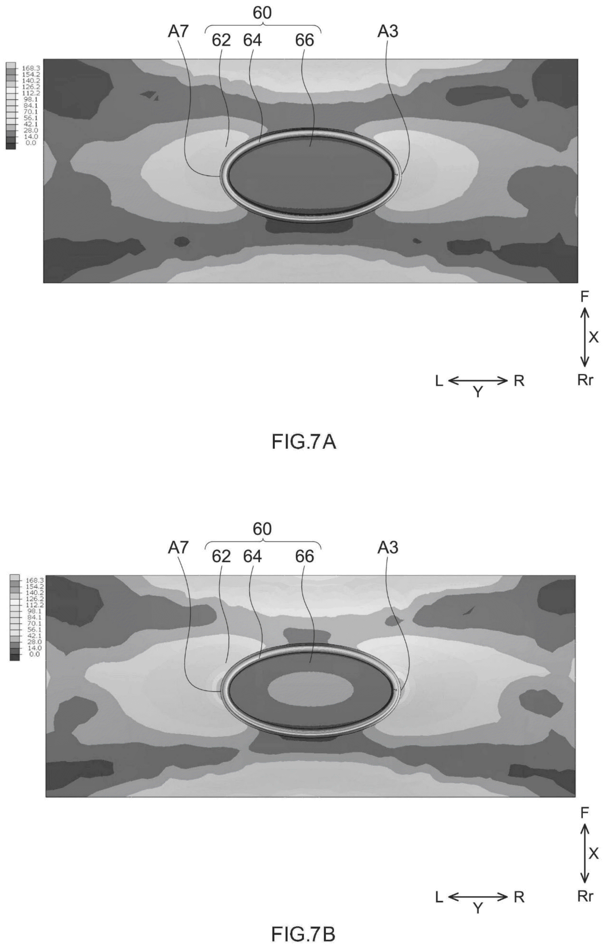

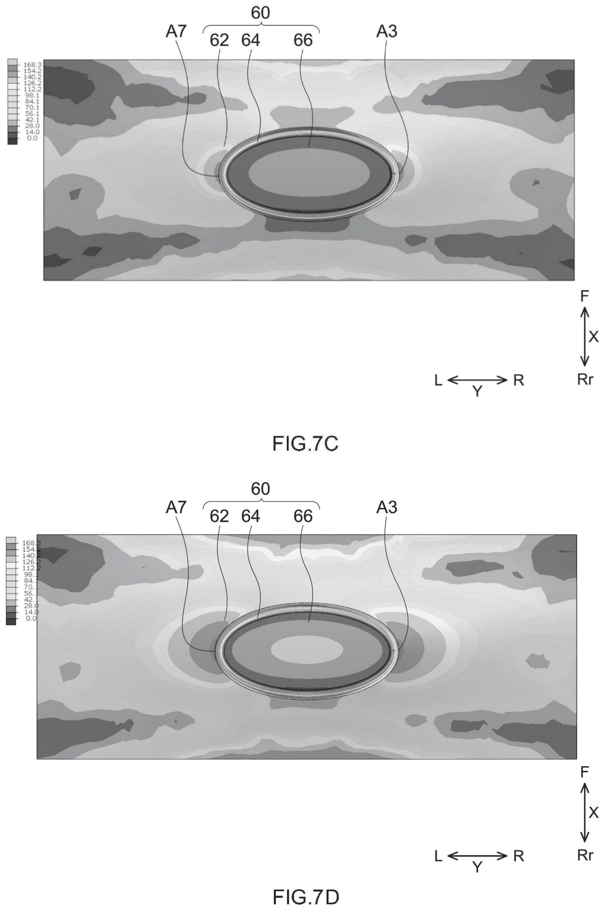

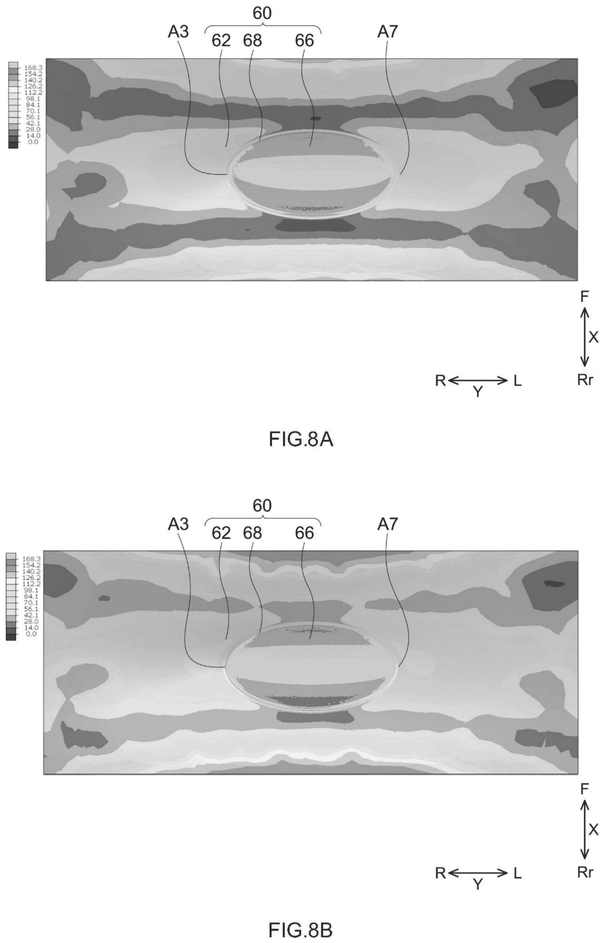

Below, results from analysis of the breakage of a groove portion which satisfies the above configuration will be described. FIGs. 7A to 7D shows CAE (computer aided engineering) analysis diagrams of the stress (Mises) distribution for the gas discharging valve in the outer surface side of the case 10 when an internal pressure is applied to the case 10 according to this embodiment. FIG. 7A shows a CAE analysis diagram when an internal pressure of 0.15 MPa is applied. FIG. 7B shows a CAE analysis diagram when an internal pressure of 0.2 MPa is applied. FIG. 7C shows a CAE analysis diagram when an internal pressure of 0.25 MPa is applied. FIG. 7D shows a CAE analysis diagram when an internal pressure of 0.35 MPa is applied. FIGs. 8A and 8B show CAE analysis diagrams of the stress (Mises) distribution for the gas discharging valve 60 in the inner surface side of the case 10 when an internal pressure is applied to the case 10 according to this embodiment. FIG. 8A shows a CAE analysis diagram when an internal pressure of 0.25 MPa is applied. FIG. 8B shows a CAE analysis diagram when an internal pressure of 0.35 MPa is applied. In the case 10 as a model used for CAE, the thickness Tᵣ₃ of the residual wall portion 68 in the third region A3 of the gas discharging valve 60 is designed to be smaller than the thicknesses of the residual wall portion 68 in the other regions except for the thickness Tᵣ₇ of the residual wall portion 68 in the seventh region A7. Further, in the case 10 as a model used for CAE, the thickness Tᵣ₇ of the residual metal portion 68 in the seventh region A7 is designed to be smaller than the thicknesses of the residual wall portion 68 in the other regions except for the thickness Tᵣ₃ of the residual wall portion 68 in the third region.

As shown in FIGs. 7A to 7D and FIGs. 8A and 8B, when the internal pressure of the case 10 increases, it can be found that a larger stress is exerted in the vicinity of the groove portion 64 and the residual wall portion 68 in the third region A3 and the seventh region A7 of the gas discharging valve 60 as compared to the other regions. Specifically, in this embodiment, the thickness Tᵣ₃ of the residual wall portion 68 in the third region A3 and the thickness Tᵣ₇ of the residual wall portion 68 in the seventh region A7 are smaller than the thicknesses of the residual wall portions 68 in the other regions. This configuration significantly increases the likelihood that the residual wall portion 68 in the third region A3 and the seventh region A7 will be breakage initiation points.

The term "activation pressure" of the gas discharging valve 60 according to this embodiment refers to a pressure at which the residual wall portion 68 breaks in the third region A3 and the seventh region A7. In view of reliably activating the gas discharging valve 60, the residual wall portion 68 in the third region A3 and the seventh region A7 is configured to break when the internal pressure of the case 10 reaches 0.9 MPa or more (more preferably 1.0 MPa or more). But the configuration is not limited to this. In other words, the activation pressure of the gas discharging valve 60 is preferably 0.9 MPa or more, more preferably 1.0 MPa or more. On the other hand, the upper limit of the activation pressure for the gas discharging valve 60 is, for example, 1.4 MPa or less, and preferably 1.2 MPa or less. It is noted that the activation pressure of the gas discharging valve 60 can be adjusted by adjusting the thickness Tᵣ₃ of the residual wall portion 68 in the third region A3 and the thickness Tᵣ₇ of the residual wall portion 68 in the seventh region A7. The thickness of the residual wall portion 68 can be appropriately adjusted depending on a material of the gas discharging valve 60. For example, when the material of the gas discharging valve 60 is aluminum, the thickness Tᵣ₃ of the residual wall portion 68 in the third region A3 and the thickness Tᵣ₇ of the residual wall portion 68 in the seventh region A7 may each be 30 µm to 45 µm, and more preferably 35 µm to 40 µm. Further, when the material of the gas discharging valve 60 is stainless steel, the thickness Tᵣ₃ of the residual wall portion 68 in the third region A3 and the thickness Tᵣ₇ of the residual wall portion 68 in the seventh region A7 may each be 8 µm to 20 µm, and more preferably 10 µm to 15 µm.

In order to more rapidly form an opening in the gas discharging valve 60, a plurality of breakage initiation points are preferably created. In view of this, it is preferred that the thickness Tᵣ₃ of the residual wall portion 68 in the third region A3 and the thickness Tᵣ₇ of the residual wall portion 68 in the seventh region A7 are substantially the same. But the configuration is not limited to this. It is noted that as shown in FIG. 5, the thickness Tᵣ₃ of the residual wall portion 68 in the third region A3 and the thickness Tᵣ₇ of the residual wall portion 68 in the seventh region A7 are substantially the same in this embodiment. The phrase "thicknesses are substantially the same" as used in the present specification refers to a condition where the difference between the thickness Tᵣ₃ of the residual wall portion 68 in the region A3 and the thickness Tᵣ₇ of the residual wall portion 68 in the region A7 is 20 µm or less (preferably 10 µm or less).

The thickness of the residual wall portion 68 in a region having a smaller thickness out of the thickness Tᵣ₃ of the residual wall portion 68 in the third region A3 and the thickness Tᵣ₇ of the residual wall portion 68 in the seventh region A7 is considered as 100%. However, the thickness Tᵣ₅ of the residual wall portion 68 in the fifth region A5 in this embodiment is preferably 110% or more, and more preferably 120% or more. On the other hand, the thickness of the residual wall portion 68 in a region having a smaller thickness out of the thickness Tᵣ₃ of the residual wall portion 68 in the third region A3 and the thickness Tᵣ₇ of the residual wall portion 68 in the seventh region A7 is considered as 100%. The thickness Tᵣ₅ of the residual wall portion 68 in the fifth region A5 in this embodiment is preferably 150% or less, and more preferably 140% or less. But the configuration is not limited to this.

As shown in FIG. 6, the thickness Tᵣ₁ of the residual wall portion 68 in the first region A1 is larger than the thickness Tᵣ₅ of the residual wall portion 68 in the fifth region A5 in this embodiment. The thickness Tᵣ₁ of the residual wall portion 68 in the first region A1 is preferably larger than the thickness Tᵣ₅ of the residual wall portion 68 in the fifth region A5. But the configuration is not limited to this. Further, the thickness Tᵣ₁ of the residual wall portion 68 in the first region A1 is the largest in the residual wall portion 68 in the regions A1 to A8 of the gas discharging valve 60. But the configuration is not limited to this. According to this configuration, when sequential breakages occur in the residual wall portion 68 along the groove portion 64, the residual wall portion 68 in the fifth region A5 breaks before the residual portion 68 in the first region A1. Meanwhile, the valve portion 66 continues to experience the internal pressure. As a result, the valve portion 66 will bend outwardly from the case 10 along the groove portion 64 in the first region A1. This enables an opening having a sufficient size to be formed in a gas discharging valve 60. However, the thickness Tᵣ₁ of the residual wall portion 68 in the first region A1 may be the same as the thickness Tᵣ₅ of the residual wall portion 68 in the fifth region A5. But the configuration is not limited to this.

When the thickness Tᵣ₅ of the residual wall portion 68 in the fifth region A5 is considered as 100%, the thickness Tᵣ₁ of the residual wall portion 68 in the first region A1 may be 100% or more, preferably 110% or more, and more preferably 120% or more. But the configuration is not limited to this. There is no particular limitation for the upper limit of the thickness Tᵣ₅ of the residual wall portion 68 in the region A5, but it is preferably smaller than the thickness T₀ of the base portion 62 in view of facilitating bending the valve portion 66 outwardly from the case 10. In view of this, when the thickness T₀ of the base portion 62 is considered as 100%, the thickness Tᵣ₁ of the residual wall portion 68 in the first region A1 may be, for example, 40% or less, preferably 30% or less, and more preferably 20% or less.

The thickness Tᵣ₂ of the residual wall portion 68 in the second region A2 preferably satisfies the relationship Tᵣ₃ < Tᵣ₂ ≤ Tᵣ₁ for the thicknesses (Tᵣ₁ and Tᵣ₃) of the residual wall portion 68 in the adjacent regions (the first region A1 and the third region A3). The thickness Tᵣ₈ of the residual wall portion 68 in the eighth region A8 preferably satisfies the relationship Tᵣ₇ < Tᵣ₈ ≤ Tᵣ₁ for the thicknesses (Tᵣ₁ and Tᵣ₇) of the residual wall portion 68 in the adjacent regions (the first region A1 and the seventh region A7). The thickness Tᵣ₂ of the residual wall portion 68 in the second region A2 may be the same as or different from the thickness Tᵣ₈ of the residual wall portion 68 in the eighth region A8. In several preferred embodiments, the thickness Tᵣ₂ of the residual wall portion 68 in the second region A2 is preferably smaller than the thickness Tᵣ₁ of the residual wall portion 68 in the first region A1, and larger than the thickness Tᵣ₃ of the residual wall portion 68 in the third region A3 (Tᵣ₃ < Tᵣ₂ < Tᵣ₁). But the configuration is not limited to this. Further, in several preferred embodiments, the thickness Tᵣ₈ of the residual wall portion 68 in the eighth region A8 is preferably smaller than the thickness Tᵣ₁ of the residual wall portion 68 in the first region A1, and larger than the thickness Tᵣ₇ of the residual wall portion 68 in the seventh region A7 (Tᵣ₇ < Tᵣ₈ < Tᵣ₁). But the configuration is not limited to this. This suitably promotes the sequential breakages of the residual wall portion 68 from the third region A3 and the seventh region A7 to the first region A1.

The thickness Tᵣ₂ of the residual wall portion 68 in the second region A2 and the thickness Tᵣ₈ of the residual wall portion 68 in the eighth region A8 may gradually decrease or gradually increase in accordance with the thicknesses in the adjacent regions. But the configuration is not limited to this. In several preferred embodiments, it is preferred that the thickness Tᵣ₂ of the residual wall portion 68 in the second region A2 gradually decreases from 1 o'clock to 2 o'clock (from the first region A1 to the third region A3), and that the thickness Tᵣ₈ of the residual wall portion 68 in the eighth region A8 gradually increases from 10 o'clock to 11 o'clock (from the seventh region A7 to the first region A1). This more smoothly promotes the sequential breakages of the residual wall portion 68 from the third region A3 and the seventh region A7 to the first region A1.

The thickness Tᵣ₄ of the residual wall portion 68 in the fourth region A4 preferably satisfies the relationship Tᵣ₃ < Tᵣ₄ ≤ Tᵣ₅ for the thicknesses (Tᵣ₃ and Tᵣ₅) of the residual wall portion 68 in the adjacent regions (the third region A3 and the fifth region A5). The thickness Tᵣ₆ of the residual wall portion 68 in the sixth region A6 preferably satisfies the relationship Tᵣ₇ < Tᵣ₆ ≤ Tᵣ₅ for the thicknesses (Tᵣ₅ and Tᵣ₇) of the residual wall portion 68 in the adjacent regions (the fifth region A5 and the seventh region A7). The thickness Tᵣ₄ of the residual wall portion 68 in the fourth A4 may be the same as or different from the thickness Tᵣ₆ of the residual wall portion 68 in the sixth region A6. In several preferred embodiments, it is preferred that the thickness Tᵣ₄ of the residual wall portion 68 in the fourth region A4 is smaller than the thickness Tᵣ₅ of the residual wall portion 68 in the fifth region A5, and larger than the thickness Tᵣ₃ of the residual wall portion 68 in the third region A3 (Tᵣ₃ < Tᵣ₄ < Tᵣ₅). But the configuration is not limited to this. Further, in several preferred embodiments, it is preferred that the thickness Tᵣ₆ of the residual wall portion 68 in the sixth region A6 is smaller than the thickness Tᵣ₅ of the residual wall portion 68 in the fifth region A5, and larger than the thickness Tᵣ₇ of the residual wall portion 68 in the seventh region A7 (Tᵣ₇ < Tᵣ₆ < Tᵣ₅). But the configuration is not limited to this. This suitably promotes the sequential breakages of the residual wall portion 68 from the third region A3 and the seventh region A7 to the fifth region A5.

The thickness Tᵣ₄ of the residual wall portion 68 in the fourth region A4 and the thickness Tᵣ₆ of the residual wall portion 68 in the sixth region A6 may gradually decrease or gradually increase in accordance with the thicknesses in the adjacent regions. But the configuration is not limited to this. In several preferred embodiments, it is preferred that the thickness Tᵣ₄ of the residual wall portion 68 in the fourth region A4 gradually increases from 4 o'clock to 5 o'clock (from the third region A3 to the fifth region A5), and that the thickness Tᵣ₆ of the residual wall portion 68 in the sixth region A6 gradually decreases from 7 o'clock to 8 o'clock (from the fifth region A5 to the seventh region A7). This more smoothly promotes the sequential breakages of the residual wall portion 68 from the third region A3 and the seventh region A7 to the fifth region A5.

The thicknesses Tᵣ₁ to Tᵣ₈ of the residual wall portion 68 in the region A1 to the region A8 are preferably axisymmetric about the minor axis B. But the configuration is not limited to this. According to this configuration, the variation in the internal pressure experienced by the gas discharging valve 60 can be reduced. This enables more reliable advancement of the cleavage of the residual wall portion 68.

There is no particular limitation for the circumference of the groove portion 64, but it is preferably 20 mm or more, and more preferably 25 mm or more. The longer the circumference of the groove portion 64, the larger the opening formed by the gas discharging valve 60. Therefore, the gas present in the inside of the case 10 can be efficiently discharged to the outside of the case. There is no particular limitation for the upper limit of the circumference of the groove portion 64, but it may be, for example, 40 mm or less, more preferably 35 mm or less.

As shown in FIG. 3, the gas discharging valve 60 is provided in a region including the center of gravity Gₐ of the lower surface 12a. Further, in this embodiment, the center of gravity Gₐ of the lower surface 12a substantially coincides with the center C_{P} of the gas discharging valve 60. It is preferably configured so that the center of gravity of a surface of the case 10 (in this embodiment, the lower surface 12a) on which the gas discharging valve 60 is provided substantially coincides with the center of the gas discharging valve 60. But the configuration is not limited to this. According to this configuration, the variation in stress due to curved deformation of the case 10 can be reduced because the stress can efficiently be exerted on the gas discharging valve 60. This enables more reliable advancement of the cleavage of the residual wall portion 68. However, in other embodiments, the center of gravity of a surface of the case 10 on which the gas discharge valve 60 is provided needs not coincide with the center C_{P} of the gas discharging valve 60. The center C_{P} of the gas discharging valve 60 may be positioned so that it is offset from the center of gravity Gₐ of the lower surface 12a to one side along the long side direction Y. It is noted that the term "center of gravity of a surface on which the gas discharging valve of the case is provided" as used in the present specification refers to an intersection point of two diagonal lines indicated by the imaginary lines as shown in FIG. 3, when the surface on which the gas discharging valve of the case is provided is flat and rectangular. This point corresponds to the center of gravity G. Further, the term "center of the gas discharging valve" as used in the present specification refers to an intersection point of the major axis A and the minor axis B of the elliptical groove portion.

As shown in FIG. 5, in this embodiment, the shape of the groove portion 64 in a cross-section is V-shaped. However, the shape of the groove portion 64 in a cross-sectional view is not limited to this. For example, the shape of the groove portion 64 in a cross-sectional view may be square, U-shaped, semicircular, or the like. In view of more reliably cleaving the residual wall portion 68, the shape of the groove portion 64 in a cross-sectional view is preferably V-shaped. But the configuration is not limited to this. There is no particular limitation for the method of forming the groove portion 64, but the groove portion 64 can be formed, for example, by laser processing. This allows the thickness of the residual wall portion 68 in each region to be controlled to a desired thickness.

It is noted that as shown in FIG. 3, the groove portion 64 is formed on the outer surface of the lower surface 12a of the case 10 in this embodiment. The groove portion 64 is preferably formed on the outer surface of the case 10. But the configuration is not limited to this. According to this configuration, when the internal pressure of the case increases and the gas discharging valve 60 is subjected to pressure from the inner surface toward the outer surface side of the case 10, the groove portion 64 can expand to break the residual wall portion 68. This can further improve the activation stability of the gas discharging valve 60. However, a surface on which the groove portion 64 is formed may be the inner surface of the case 10. Even in this embodiment, the residual wall portion 68 in the third region A3 and the residual wall portion 68 in the seventh region A7 can be used as the breakage initiation points.

As described above, according to the electrical energy storage device 100 comprising the gas discharging valve 60 of this embodiment, a sufficient opening can be formed in the gas discharging valve 60 when the internal pressure of the case 10 increases. This allows the gas present in the inside of the case 10 to be discharged to the outside.

The electrode body 20 is housed inside the case 10 as shown in FIG. 2. Although not shown in the figures, the electrode body 20 has a positive electrode and a negative electrode. There is no particular limitation for the configuration of the electrode body 20, but it may be the same as a conventional configuration. The positive electrode typically comprises a positive electrode current collector and a positive electrode active material layer bonded to the positive electrode current collector. The negative electrode typically comprises a negative electrode current collector and a negative electrode active material layer bonded to the negative electrode current collector. The electrode body 20 may be housed inside the case 10 while covered by an insulating sheet (an electrode body holder) made of a resin. The electrode body 20 may be housed inside the case 10 in an integrated state with an insulating member (e.g., a spacer) made of a resin.

There is no particular limitation for the number of electrode bodies 20 housed inside the case 10, but it may be one or two or more. The electrode body 20 in this embodiment is a wound electrode body where a strip-shaped positive electrode and a strip-shaped negative electrode are laminated via a strip-shaped separator, and wound in the longitudinal direction around a winding axis. In this embodiment, the electrode body 20 is installed inside the case 10 with its winding axis oriented substantially parallel to the long side direction Y. However, in other embodiments, the electrode body 20 may be a laminated electrode body where a plurality of rectangular-shaped positive electrodes and a plurality of rectangular-shaped negative electrodes are stacked in an insulated manner, for example, via a separator in the short side direction X. Further, there is no particular limitation for the individual components of the electrode body 20 (such as the positive electrode, the negative electrode, and the separator), but they may be the same as those used in conventional electrical energy storage devices.

As shown in FIG. 2, a positive electrode tab 23 is provided on the positive electrode of the electrode body 20. The positive electrode tab 23 is, in this embodiment, a part of the positive electrode current collector. The positive electrode tab 23 has a protruded shape in this embodiment, and protrudes from the electrode body 20 toward the side of a first sealing plate 14 (the right side in the long side direction Y in FIG. 2). In this embodiment, the positive electrode tab 23 is electrically connected to a positive electrode terminal 30 via a positive electrode current collector 32. On the other hand, a negative electrode tab 24 is provided on the negative electrode of the electrode body 20. The negative electrode tab 24 is, in this embodiment, a part of the negative electrode current collector. The negative electrode tab 24 has a protruded shape in this embodiment, and protrudes from the electrode body 20 toward the side of a second sealing plate 14 (the left side in the long side direction Y in FIG. 2). In this embodiment, the negative electrode tab 24 is electrically connected to a negative electrode terminal 40 via a negative electrode current collector 42.

A non-aqueous electrolyte solution is contained inside the case 10 along with the electrode body 20. There is no particular limitation for the non-aqueous electrolyte solution, but it may be the same as a conventional non-aqueous electrolyte solution. The non-aqueous electrolyte solution is a non-aqueous based liquid electrolyte including a non-aqueous solvent and a supporting salt. Non-aqueous solvents include, for example, carbonates such as ethylene carbonate (EC), ethyl methyl carbonate (EMC), and dimethyl carbonate (DMC). Supporting salts (electrolyte salts) include, for example, fluorine-containing lithium salts such as LiPF₆ and fluorine-containing sodium salts such as NaPF₆. However, in other embodiments, an electrolyte in a solid state (a solid electrolyte) integrated with the electrode body 20 may be used instead of a non-aqueous electrolyte solution.

The positive electrode terminal 30 and the negative electrode terminal 40 in this embodiment are each fixed to the corresponding surface of the opposite surfaces (specifically, the pair of sealing plates 14) of the case 10. Specifically, the positive electrode terminal 30 is attached to the first sealing plate 14 (a sealing plate 14 in the right side of the long side direction Y in FIGs. 1 and 2). The positive electrode terminal 30 is preferably made of a metal, and more preferably consists of aluminum or an aluminum alloy. As shown in FIG. 2, the positive electrode terminal 30 is electrically connected to the positive electrode tab 23 inside the case 10 via the positive electrode current collector 32.

The negative electrode terminal 40 is attached to the second sealing plate 14 (a sealing plate 14 in the left side of the long side direction Y in FIGs. 1 and 2). The negative electrode terminal 40 is preferably made of a metal, and more preferably consists of, for example, copper or a copper alloy. As shown in FIG. 2, the negative electrode terminal 40 is electrically connected to the negative electrode tab 24 inside the case 10 via the negative electrode current collector 42. It is noted that in this embodiment, the positive electrode terminal 30 and the negative electrode terminal 40 are each provided on the corresponding sealing plate of the pair of sealing plates 14. However, in other embodiments, the positive electrode terminal 30 and the negative electrode terminal 40 may be provided on the same sealing plate 14 or on the case body 12.

The electrical energy storage device 100 can be used for various applications, and typically well-suited for use as a power source (electrical driving power source) for motors installed in various vehicles, for example, passenger cars, trucks, and the like. There is no particular limitation for the types of vehicles, but they include, for examples, plug-in hybrid electric vehicles (PHEVs), hybrid electric vehicles (HEVs), battery electric vehicles (BEVs), and the like.

In the above, the embodiments of the technology disclosed herein are described. But the foregoing descriptions are merely illustrative, and shall not limit the scope of the claims. The technology described in the claims encompasses various modifications and alterations made to the specific examples illustrated in the foregoing descriptions. It is noted that the descriptions about those matters common to the embodiments may be omitted or simplified in the description of the following modified examples.

### <First modified example>

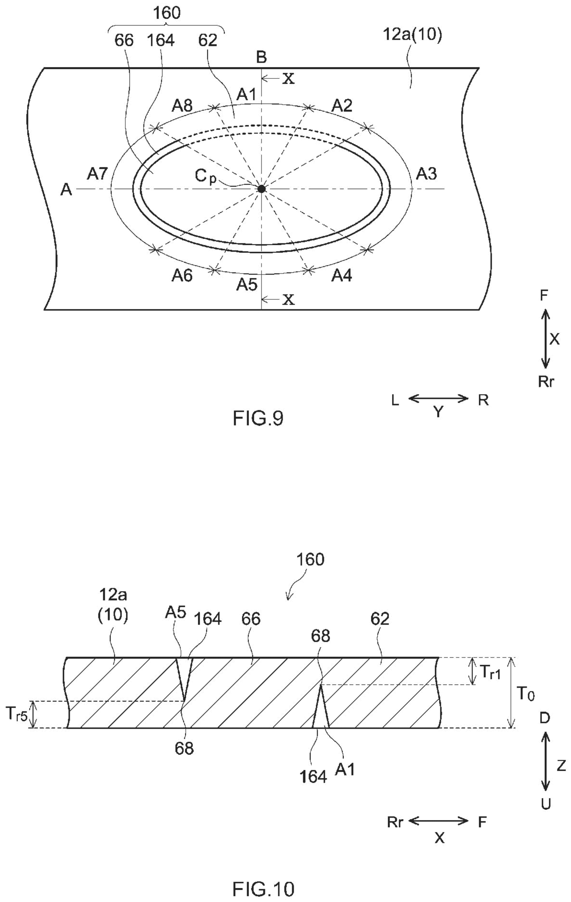

In the above embodiments, the groove portion 64 is formed annularly on the outer surface of the case 10 (in other words, extending from the first region to the eighth region). But the configuration of the groove portion 64 is not limited to this. FIG. 9 shows a schematic plan view of the vicinity of a gas discharging valve 160 according to a first modified example. FIG. 10 is a schematic longitudinal sectional view along the line X-X in FIG. 9. The gas discharging valve 160 according to the first modified example compromises a groove portion 164 instead of the groove portion 64. The remaining configurations may be the same as those described in the above embodiments.

As shown in FIGs. 9 and 10, in the first modified example, the groove portion 164 is formed in the outer surface side of the case 10 (the lower surface 12a of the case body 12), and extends from the third region A3 to the seventh region A7. In contrast, the groove portion 164 is formed in the inner surface side of the lower surface 12a of the case body 12, and extends from the eighth region A8 to the second region A2. In several preferred embodiments, the groove portion 164 in a region including the third region A3 to the seventh region A7 is formed in the outer surface side of the case 10, while the groove portion 164 in a region including the first region A1 may be formed in the inner surface side of the case 10. According to this configuration, the sequential breakage of the residual wall portion 68 along the groove portion 164 formed in the outer surface side stops in a region where no groove is formed in the outer surface side (in this modified example, from the eighth region A8 to the second region A2). Meanwhile, the valve portion 66 continues to experience the internal pressure. As a result, the valve portion 66 will bend outwardly from the case 10 along the groove portion 164 formed in the inner surface side of the case 10. In other words, in this configuration, the groove portion 164 formed in the inner surface side of the case 10 can function as a guide member for directing the valve portion 66 to the outside of the case 10. This enables an opening having a sufficient size to be formed in the gas discharging valve 160. Further, according to the above configuration, when the gas discharging valve 160 is activated, the scattering of the valve portion 66 can be prevented. It is noted that the groove portion 164 in the eighth region A8 and the second region A2 may be formed in the outer surface side of the case 10.

### <Second modified example>

In the case 10 according to the above embodiments, the case body 12 is a rectangular tube, and has openings 12h at both ends in the long side direction Y. Two sealing plates 14 are used in the above embodiments. But the configuration of the case 10 is not limited to this. In a case according to a modified example, the case body 12 may be a bottomed rectangular (box-shaped) structure having an opening only at one end. In this embodiment, a single sealing plate may be used.

As described above, the specific aspects of the technology disclosed herein include those described in the following items.

### <Item 1>

An electrical energy storage device comprising an electrode body and a case for housing the electrode body, wherein
the case comprises a gas discharging valve, and
the gas discharging valve comprises a groove portion having a planar shape of an ellipse defined by a major axis A and a minor axis B, and a residual wall portion adjacent to the groove portion in a thickness direction of the gas discharging valve, and
when one end of the minor axis B is considered as 0 o'clock, and the other end of the minor axis B is considered as 6 o'clock, and one end of the major axis A is considered as 3 o'clock, and the other end of the major axis A is considered as 9 o'clock in the groove portion having a planar shape of an ellipse, the gas discharging valve comprises:
   a first region from 11 o'clock to 1 o'clock,
   a second region from 1 o'clock to 2 o'clock,
   a third region from 2 o'clock to 4 o'clock,
   a fourth region from 4 o'clock to 5 o'clock,
   a fifth region from 5 o'clock to 7 o'clock,
   a sixth region from 7 o'clock to 8 o'clock,
   a seventh region from 8 o'clock to 10 o'clock, and
   an eighth region from 10 o'clock to 11 o'clock, and
   when the thicknesses of the residual wall portion in the first region to the eighth region are designated as Tᵣ₁ to Tᵣ₈, respectively,
   the thickness Tᵣ₃ of the residual wall portion in the third region is smaller than the thicknesses of the residual wall portion in the other regions except for the thickness Tᵣ₇ of the residual wall portion in the seventh region, and the thickness Tᵣ₇ of the residual wall portion in the seventh region is smaller than the thicknesses of the residual wall portion in the other regions except for the thickness Tᵣ₃ of the residual wall portion in the third region.

### <Item 2>

The electrical energy storage device according to Item 1, wherein
the thickness Tᵣ₁ of the residual wall portion in the first region is larger than the thickness Tᵣ₅ of the residual wall portion in the fifth region.

### <Item 3>

The electrical energy storage device according to Item 1 or 2, wherein
the groove portion in a region including the third region to the seventh region is formed in an outer surface side of the case, and the groove portion in a region including the first region is formed in an inner surface side of the case.

### <Item 4>

The electrical energy storage device according to any one of Items 1 to 3, wherein
the thickness Tᵣ₂ of the residual wall portion in the second region is smaller than the thickness Tᵣ₁ of the residual wall portion in the first region, and larger than the thickness Tᵣ₃ of the residual wall portion in the third region, and
the thickness Tᵣ₈ of the residual wall portion in the eighth region is smaller than the thickness Tᵣ₁ of the residual wall portion in the first region, and larger than the thickness Tᵣ₇ of the residual wall portion in the seventh region.

### <Item 5>

The electrical energy storage device according to any one of Items 1 to 4, wherein
the thickness Tᵣ₂ of the residual wall portion in the second region gradually decreases from the 1 o'clock to the 2 o'clock, and
the thickness Tᵣ₈ of the residual wall portion in the eighth region gradually increases from the 10 o'clock to the 11 o'clock.

### <Item 6>

The electrical energy storage device according to any one of Items 1 to 5, wherein
the thickness Tᵣ₄ of the residual wall portion in the fourth region is smaller than the thickness Tᵣ₅ of the residual wall portion in the fifth region, and larger than the thickness Tᵣ₃ of the residual wall portion in the third region, and
the thickness Tᵣ₆ of the residual wall portion in the sixth region is smaller than the thickness Tᵣ₅ of the residual wall portion in the fifth region, and larger than the thickness Tᵣ₇ of the residual wall portion in the seventh region.

### <Item 7>

The electrical energy storage device according to any one of Items 1 to 6, wherein
the thickness Tᵣ₄ in the residual wall portion in the fourth region gradually increases from the 4 o'clock to the 5 o'clock, and
the thickness Tᵣ₆ in the residual wall portion in the sixth region gradually decreases from the 7 o'clock to the 8 o'clock.

### <Item 8>

The electrical energy storage device according to any one of Items 1 to 7, wherein
the residual wall portion is configured to break in the third region and the seventh region when an internal pressure in the case reaches 0.9 MPa or more.

### <Item 9.

The electrical energy storage device according to any one of Items 1 to 8, wherein
the thicknesses Tᵣ₁ to Tᵣ₈ of the residual wall portion in the region 1 to the region 8 are axisymmetric about the minor axis B.

### <Item 10>

The electrical energy storage device according to any one of Items 1 to 9, wherein
an aspect ratio (the major axis/the minor axis) of the elliptical groove portion is 2 or more and 5 or less.

## Claims

1. An electrical energy storage device (100) comprising an electrode body (20) and a case (10) for housing the electrode body (20), wherein
the case (10) comprises a gas discharging valve (60, 160), and
the gas discharge valve (60, 160) comprises a groove portion (64, 164) having a planar shape of an ellipse defined by a major axis A and a minor axis B, and a residual wall portion (68) adjacent to the groove portion (64, 164) in a thickness direction of the gas discharging valve (60, 160), and
when one end of the minor axis B is considered as 0 o'clock, and the other end of the minor axis B is considered as 6 o'clock, and one end of the major axis A is considered as 3 o'clock, and the other end of the major axis A is considered as 9 o'clock in the groove portion (64, 164) having a planar shape of an ellipse, the gas discharging valve (60, 160) comprises:
a first region (A1) from 11 o'clock to 1 o'clock,
a second region (A2) from 1 o'clock to 2 o'clock,
a third region (A3) from 2 o'clock to 4 o'clock,
a fourth region (A4) from 4 o'clock to 5 o'clock,
a fifth region (A5) from 5 o'clock to 7 o'clock,
a sixth region (A6) from 7 o'clock to 8 o'clock,
a seventh region (A7) from 8 o'clock to 10 o'clock, and
an eighth region (A8) from 10 o'clock to 11 o'clock, and
when the thicknesses of the residual wall portion (68) in the first region (A1) to the eighth region (A8) are designated as Tᵣ₁ to Tᵣ₈, respectively,
the thickness Tᵣ₃ of the residual wall portion (68) in the third region (A3) is smaller than the thicknesses of the residual wall portion (68) in the other regions except for the thickness Tᵣ₇ of the residual wall portion (68) in the seventh region (A7), and the thickness Tᵣ₇ of the residual wall portion (68) in the seventh region (A7) is smaller than the thicknesses of the residual wall portion (68) in the other regions except for the thickness Tᵣ₃ of the residual wall portion (68) in the third region (A3).

2. The electrical energy storage device according to claim 1, wherein
the thickness Tᵣ₁ of the residual wall portion (68) in the first region (A1) is larger than the thickness Tᵣ₅ of the residual wall portion (68) in the fifth region.

3. The electrical energy storage device (100) according to claim 1 or 2, wherein
the groove portion (68) in a region including the third region (A3) to the seventh region (A7) is formed in an outer surface side of the case (10), and the groove portion (68) in a region including the first region (A1) is formed in an inner surface side of the case (10).

4. The electrical energy storage device (100) according to any one of claims 1 to 3, wherein
the thickness Tᵣ₂ of the residual wall portion (68) in the second region (A2) is smaller than the thickness Tᵣ₁ of the residual wall portion (68) in the first region (A1), and larger than the thickness Tᵣ₃ of the residual wall portion (68) in the third region (A3), and
the thickness Tᵣ₈ of the residual wall portion (68) in the eighth region (A8) is smaller than the thickness Tᵣ₁ of the residual wall portion (68) in the first region (A1), and larger than the thickness Tᵣ₇ of the residual wall portion (68) in the seventh region (A7).

5. The electrical energy storage device (100) according to any one of claims 1 to 4, wherein
the thickness Tᵣ₂ of the residual wall portion (68) in the second region (A2) gradually decreases from the 1 o'clock to the 2 o'clock, and
the thickness Tᵣ₈ of the residual wall portion (68) in the eighth region (A8) gradually increases from the 10 o'clock to the 11 o'clock.

6. The electrical energy storage device (100) according to any one of claims 1 to 5, wherein
the thickness Tᵣ₄ of the residual wall portion (68) in the fourth region (A4) is smaller than the thickness Tᵣ₅ of the residual wall portion (68) in the fifth region (A5), and larger than the thickness Tᵣ₃ of the residual wall portion (68) in the third region (A3), and
the thickness Tᵣ₆ of the residual wall portion (68) in the sixth region (A6) is smaller than the thickness Tᵣ₅ of the residual wall portion (68) in the fifth region (A5), and larger than the thickness Tᵣ₇ of the residual wall portion (68) in the seventh region (A7).

7. The electrical energy storage device (100) according to any one of claims 1 to 6, wherein
the thickness Tᵣ₄ of the residual wall portion (68) in the fourth region (A4) gradually increases from the 4 o'clock to the 5 o'clock, and
the thickness Tᵣ₆ of the residual wall portion (68) in the sixth region (A6) gradually decreases from the 7 o'clock to the 8 o'clock.

8. The electrical energy storage device (100) according to any one of claims 1 to 7, wherein
the residual wall portion (68) is configured to break in the third region (A3) and the seventh region (A7) when an internal pressure in the case reaches 0.9 MPa or more.

9. The electrical energy storage device (100) according to any one of claims 1 to 8, wherein
the thicknesses Tᵣ₁ to Tᵣ₈ of the residual wall portion (68) in the region 1 (A1) to the region 8 (A8) are axisymmetric about the minor axis B.

10. The electrical energy storage device (100) according to any one of claims 1 to 9, wherein
an aspect ratio (the major axis/the minor axis) of the elliptical groove portion (64, 164) is 2 or more and 5 or less.
